# EUROPEAN PATENT APPLICATION

(11) **EP 0 751 309 A1**
(43) Date of publication of application: **02.01.1997**
(21) Application number: 96110174.8
(22) Date of filing: 24.06.1996
(51) Int. Cl.: F16C 3/035

(54) **Sliding bearing**

(30) Priority: 30.06.1995 JP 165818/95
(71) Applicant: Fuji Kiko Co., Ltd., Tokyo 103 (JP)
(72) Inventor: Kurita, Haruhide, Kosai-shi, Shizuoka 431-04 (JP)
(74) Representative: Grünecker, Kinkeldey, Stockmair & Schwanhäusser Anwaltssozietät

(57) **Abstract**

A sliding bearing (2) comprises a bush (5) which contacts the outer periphery of a shaft (6) and has a peripheral wall comprising circumferentially divided portions (20) and an annular shank (19) for connecting the circumferentially divided portions (20) at one end thereof, and a mount (4) disposed outside the inner bush (5). The circumferentially divided portions (20) of the peripheral wall are independently engaged with the mount (4) on the annular shank (19).

## Description

### BACKGROUND OF THE INVENTION

The present invention relates generally to a sliding bearing and more particularly, to a bearing for a steering shaft of a steering column for motor vehicles.

The steering column for motor vehicles is constructed such that the steering shaft is coaxially rotatably inserted in a jacket tube fixed to a vehicle body, and the bearings are arranged on the upper and lower end sides of the steering shaft. The upper bearing includes a ball bearing, etc., whereas the lower bearing is in the form of a needle roller bearing. In order to prevent backlash of the steering shaft and absorb decentering thereof, the lower bearing or needle roller bearing is held by a resilient member made of a rubber, etc., to which a press-fit ring is arranged at an outer periphery thereof. The press-fit ring is inserted in the jacket tube to fix the resilient member, obtaining the needle roller bearing which is in slide contact with the steering shaft.

The needle roller bearing comprises needles, a retainer as a holder of the needles, and an outer race as an outer ring on which the needles rotate.

Additionally, the lower bearing includes a slide bush made of a rubber or resin, a slide bush shaped in a cylinder out of an iron plate and having an inside with low friction coating, etc.

However, the above lower bearing or needle roller bearing has inconveniences such as a large number of parts, increased cost due to expensiveness of the needle roller bearing, and occurrence of rolling noise of the needles due to surface roughness of the steering shaft. On the other hand, the former slide bush has a difficulty in compatibility of torque with clearance, a lower durability, etc. The latter slide bush produces inevitable clearance due to its structure, which results in occurrence of hammering of the steering shaft, and impossible absorption of decentering thereof. Moreover, with the latter slide bush, a high accuracy is required of the outer diameter of the steering shaft and the inner diameter of the slide bush.

It is, therefore, an object of the present invention to provide a sliding bearing which is excellent in followability with respect to dispersed diameter of the steering shaft and decentering thereof, and is free from backlash even with wear.

### SUMMARY OF THE INVENTION

There is provided, according to the present invention, a sliding bearing for a shaft, comprising:
a bush arranged to rotatably receive the shaft, said bush contacting the shaft on an outer periphery thereof, said bush including a peripheral wall comprising a plurality of circumferentially divided portions and an annular shank for connecting said plurality of circumferentially divided portions at one end thereof; and
a mount disposed outside said inner bush,
said plurality of circumferentially divided portions of said peripheral wall being independently rotatably engaged with said mount on said annular shank.

### BRIEF DESCRIPTION OF THE DRAWINGS

Fig. 1 is a longitudinal section showing a first preferred embodiment of a sliding bearing according to the present invention;
Fig. 2 is a enlarged fragmentary view of Fig. 1;
Fig. 3 is a sectional view taken along the line III-III in Fig. 2;
Fig. 4 is a view similar to Fig. 3, taken along the line IV-IV in Fig. 2;
Fig. 5 is a view similar to Fig. 4, taken along the line V-V in Fig. 4;
Fig. 6 is a fragmentary side view showing an inner bush; and
Fig. 7 is a view similar to Fig. 2, showing a second preferred embodiment of the present invention.

### DETAILED DESCRIPTION OF THE INVENTION

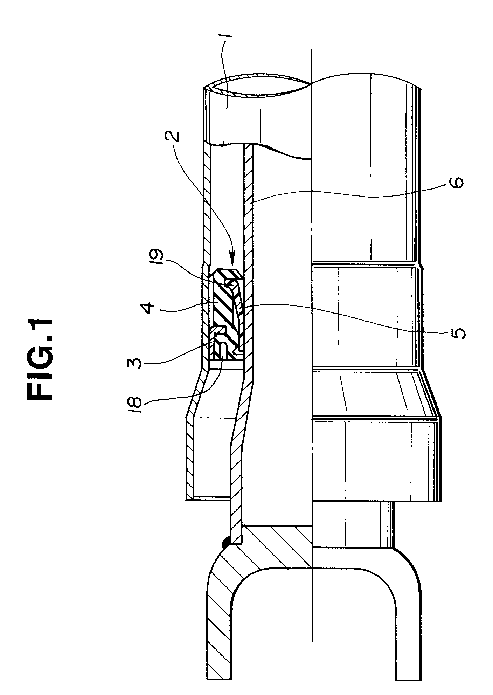

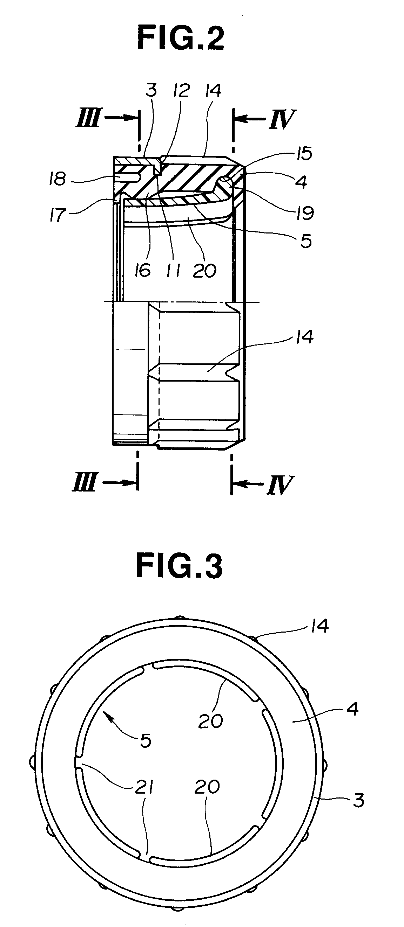

Figs. 1-6 show a first embodiment of a sliding bearing according to the present invention. Referring to Figs. 1 and 2, a sliding bearing 2 press-fitted in a jacket tube 1 on the lower end side of a hollow shaft 6 comprises a metallic press-fit ring 3, a cylindrical mount 4 comprising a resilient member made of a rubber, etc. and partly engaged with the press-fit ring 3, and an inner bush or cylindrical resin bearing 5 partly engaged with the mount 4. The shaft 6 is inserted in the inner bush 5, and has an outer periphery which contacts a peripheral wall 20 of the inner bush 5.

Referring to Figs. 2-4, the press-fit ring 3 comprises an annulus having the outer diameter substantially equal to the inner diameter of the jacket tube 1, and has one peripheral edge substantially perpendicularly bent to the center thereof so as to form a flange 11 as shown in Fig. 2.

The mount 4 has an outer periphery which is in press contact with an inner periphery of the press-fit ring 3, and a peripheral groove 12 with which the flange 11 is engaged as shown in Fig. 2. A plurality of protrusions 14 are integrally formed with the outer periphery of the mount 4 on the axial insertion side thereof or the right side of the press-fit ring 3 in Fig. 2 at circumferentially predetermined intervals. Each of the protrusions 14 protrudes slightly outwardly from the outer periphery of the press-fit ring 3 to contact an inner periphery of the jacket tube 1.

Referring to Fig. 2, a groove 15 with a substantially circular section is circumferentially formed in an inner periphery of the mount 4 in the vicinity of an axial insertion side end thereof, whereas a ridge 16 with a substantially arched section is circumferentially formed on the inner periphery of the mount 4 on the axially outer side thereof or the side of the press-fit ring 3. Moreover, a lip 17 is circumferentially integrated with the mount 4 to protrude axially outwardly of the ridge 16, and radially or to the center of the shaft 6, whereas a recess 18 with a substantially semioval section is circumferentially formed in a thick portion of the mount 4 adjacent to the press-fit ring 3 so as to open axially outwardly, constituting a thickness adjusting portion. The lip 17 serves to prevent penetration of a foreign object into the inner bush 5.

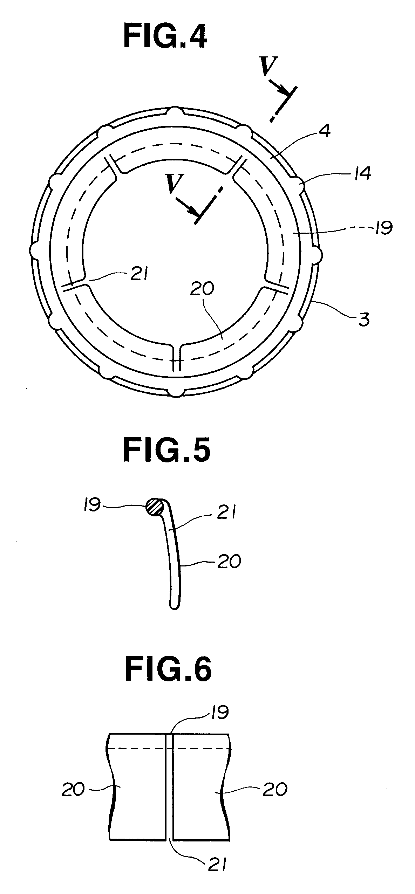

Referring to Figs. 2-6, the inner bush 5 is formed with an annular shank 19 with a substantially circular section engaged with the groove 15 of the mount 4 on the axial insertion side thereof, and comprises a cylinder member having the peripheral wall 20 with a substantially circular section which contacts the ridge 16 in which slits 21 with a predetermined width are formed at circumferentially predetermined intervals. The slits 21 are, preferably, odd in number, e.g. five as shown in Figs. 3 and 4. The inner bush 5 is made of a resin with excellent wear resistance such as polyamide (PA) or polyacetal (POM).

The peripheral wall 20 has a substantially arched section as viewed axially and circumferentially. Each portion of the peripheral wall 20 between the slits 21 has a circumferential curvature larger than that of the outer diameter of the shaft 6, and a diameter of an inscribed circle smaller than that of the shaft 6 before insertion thereof. Moreover, the portions of the peripheral wall 20 are circumferentially connected to each other in the way of a cantilever, so that the diameter of the inscribed circle of the peripheral wall 20 can be expanded on the annular shank 19 as a connecting portion due to its elasticity.

The shaft 6 is engaged with the inner bush 5, and each portion of the peripheral wall 20 contacts the outer periphery of the shaft 6 to hold it in the jacket tube 1, so that, if the shaft 1 whirls due to bending or decentering thereof, or vibrates due to a force radially input thereto, the portions of the peripheral wall 20 which is in contact with the shaft 6 are independently displaced on the annular shank 19 to press the ridge 16 of the mount 4, the ridge 16 intruding into the recess 18 to absorb such whirling or vibration. The ridge 16 returns to its former state as soon as the whirling or vibration is eliminated.

The recess 18 serves to adjust a holding force of the peripheral wall 20 which is in slide contact with the shaft 6 for holding, and reduces a restraint of the ridge 16 when expanded is the diameter of the inscribed circle of the peripheral wall 20 having the outer periphery which the ridge 16 contacts. When the difference between the outer diameter of the shaft 6 and the diameter of the inscribed circle of the peripheral wall 20 before insertion of the shaft 6 is determined to a large value, expansion of the diameter of the inscribed circle of the peripheral wall 20 causes a unnecessary increase in restraint of the ridge 16. The recess 18 prevents such unnecessary increase in restraint to decrease wear of the peripheral wall 20, improving the durability thereof.

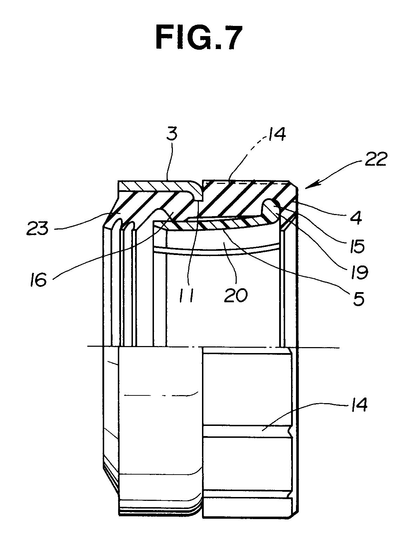

Thus, referring to Fig. 7, if the difference between the outer diameter of the shaft 6 and the diameter of the inscribed circle of the peripheral wall 2 before insertion of the shaft 6 is determined appropriately, there is no need to arrange the recess 18. This is a case of a second embodiment of the present invention. In the second embodiment, a sliding bearing 22 is formed with a plurality of lips 23 which protrude axially outwardly of the ridge 16, and radially or to the center of the shaft 6 to prevent not only penetration of a foreign object into the inner bush 5, but penetration of water, dust, etc. due to its sealing performance provided. The second embodiment is the same as the first embodiment except the above, and thus a redundant description will be omitted.

Having described the present invention in connection with the preferred embodiments, it is noted that the present invention is not limited thereto, and various changes and modifications can be made without departing from the spirit of the present invention. By way of example, the present invention is applied to the steering column, alternately, it is applicable to the other devices.

## Claims

1. A sliding bearing for a shaft, comprising:
a bush arranged to rotatably receive the shaft, said bush contacting the shaft on an outer periphery thereof, said bush including a peripheral wall comprising a plurality of circumferentially divided portions and an annular shank for connecting said plurality of circumferentially divided portions at one end thereof; and
a mount disposed outside said inner bush,
said plurality of circumferentially divided portions of said peripheral wall being independently engaged with said mount on said annular shank.

2. A sliding bearing as claimed in claim 1, wherein said peripheral wall of said bush has a substantially arched section as viewed axially and circumferentially.

3. A sliding bearing as claimed in claim 1, wherein said plurality of circumferentially divided portions of said peripheral wall are odd in number.

4. A sliding bearing as claimed in claim 1, wherein said inner bush is made of a resin with excellent wear resistance.

5. A sliding bearing as claimed in claim 1, wherein said mount includes a resilient member.

6. A sliding bearing as claimed in claim 1, wherein said mount comprises a press-fit ring disposed on an outer periphery thereof.

7. A sliding bearing as claimed in claim 6, wherein said mount has a groove with a substantially circular section in an inner periphery thereof, said annular shank being engaged with said groove.

8. A sliding bearing as claimed in claim 7, wherein said mount has a ridge on said inner periphery thereof, said ridge contacting an outer periphery of said peripheral wall.

9. A sliding bearing as claimed in claim 8, wherein said mount has at least one lip which protrudes axially outwardly of said ridge, and to the center of the shaft.

10. A sliding bearing as claimed in claim 8, wherein said mount has a recess with a substantially semioval section, said recess being formed circumferentially adjacent to said press-fit ring.
